(19) **Europäisches Patentamt / European Patent Office / Office européen des brevets**

(11) **EP 4 675 696 A1**

(12) **EUROPEAN PATENT APPLICATION**
published in accordance with Art. 153(4) EPC

(43) Date of publication:
07.01.2026 Bulletin 2026/02

(21) Application number: 24860476.1

(22) Date of filing: 30.08.2024

(51) International Patent Classification (IPC):
$H01M\ 4/131^{(2010.01)}$    $H01M\ 4/525^{(2010.01)}$
$H01M\ 10/0587^{(2010.01)}$    $H01M\ 10/052^{(2010.01)}$
$H01M\ 10/04^{(2006.01)}$    $H01M\ 50/107^{(2021.01)}$
$H01M\ 50/131^{(2021.01)}$    $H01M\ 4/02^{(2006.01)}$

(52) Cooperative Patent Classification (CPC):
H01M 4/02; H01M 4/131; H01M 4/505;
H01M 4/525; H01M 10/04; H01M 10/052;
H01M 10/0587; H01M 50/107; H01M 50/131;
Y02E 60/10

(86) International application number:
PCT/KR2024/013084

(87) International publication number:
WO 2025/048560 (06.03.2025 Gazette 2025/10)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 31.08.2023 KR 20230115742

(71) Applicant: **LG Energy Solution, Ltd.
Seoul 07335 (KR)**

(72) Inventors:
• **JANG, Seol Heui
Daejeon 34122 (KR)**
• **KIM, Do Hyeong
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **CATHODE AND LITHIUM SECONDARY BATTERY COMPRISING SAME**

(57) The present invention provides a positive electrode for a lithium secondary battery, comprising: a positive electrode current collector; and a positive electrode active material layer positioned on the positive electrode current collector, and satisfying Equation (1) below.

$$\text{Equation (1):} \quad Y = 10 \times L/(P \times T^2) < 7$$

In Equation (1), L is a loading amount ($mg/cm^2$) of the positive electrode, P is a porosity (%) of the positive electrode, and T is a tap density (g/cc) of a positive electrode active material comprised in the positive electrode active material layer.

EP 4 675 696 A1

## Description

### TECHNICAL FIELD

[Cross-reference to Related Applications]

This application claims the benefit of Korean Patent Application No. 10-2023-0115742, filed on August 31, 2023, in the Korean Intellectual Property Office, the contents of which are incorporated herein by reference.

[Technical Field]

The present invention relates to a positive electrode and a lithium secondary battery comprising the same.

### BACKGROUND ART

With the advancement of technology in electric vehicles, portable electronic devices, or the like, the demand for lithium secondary batteries as an energy source is rapidly increasing. With the advancement of technology in electric vehicles, portable electronic devices, or the like, the demand for lithium secondary batteries as an energy source is rapidly increasing. Among them, with the recent advancement of electric vehicle technology, batteries with high energy density are required.

In order to improve the energy density of lithium secondary batteries, the amount of active material included in an electrode assembly may be increased to improve the utilization of the limited space inside the battery. However, if the loading amount of the active material is increased to achieve a lithium secondary battery with high energy density, there is a problem that cracks occur in an electrode current collector in the core part during performing a winding process of an electrode assembly. If the cracks become severe, the lithium movement path of the lithium secondary battery is cut off and additional side reactions are caused, to deteriorate the long-term performance of the lithium secondary battery.

### DISCLOSURE OF THE INVENTION

### TECHNICAL PROBLEM

The present invention intends to provide a positive electrode in which cracks do not occur in the core part during winding an electrode assembly.

### TECHNICAL SOLUTION

[1] The present invention provides a positive electrode for a lithium secondary battery, the positive electrode comprising: a positive electrode current collector; and a positive electrode active material layer positioned on the positive electrode current collector, and satisfying Equation (1) below.

$$\text{Equation (1): } Y = 10 \times L/(P \times T^2) < 7$$

In Equation (1), L is a loading amount (mg/cm$^2$) of the positive electrode, P is a porosity (%) of the positive electrode, and T is a tap density (g/cc) of a positive electrode active material comprised in the positive electrode active material layer.

[2] The present invention may provide the positive electrode for a lithium secondary battery according to [1], wherein the tap density of the positive electrode active material comprised in the positive electrode active material layer is 1.8 g/cc to 2.5 g/cc.

[3] The present invention may provide the positive electrode for a lithium secondary battery according to [1] or [2], wherein the loading amount of the positive electrode active material layer is 44 mg/cm$^2$ to 56 mg/cm$^2$.

[4] The present invention may provide the positive electrode for a lithium secondary battery according to at least one of [1] to [3], wherein the porosity of the positive electrode is 22.5% to 30.0%.

[5] The present invention may provide the positive electrode for a lithium secondary battery according to at least one of [1] to [4], wherein the positive electrode active material comprised in the positive electrode active material layer is a lithium nickel-based transition metal oxide having a nickel content of 90 atom% or more among transition metals excluding lithium.

[6] The present invention may provide the positive electrode for a lithium secondary battery according to [5], wherein the positive electrode active material is a lithium nickel-based oxide represented by [Formula 2] below.

$$[Formula 2] \qquad Li_aNi_bCo_cM^1_dM^2_eO_2$$

In Formula 2, $M^1$ is Mn, Al or a combination thereof, $M^2$ is one or more selected from the group consisting of Zr, W, Y, Ba, Ca, Ti, Mg, Ta and Nb, $0.8 \leq a \leq 1.2$, $0.9 \leq b < 1$, $0 < c < 0.1$, $0 < d < 0.1$, and $0 \leq e \leq 0.05$.

[7] The present invention may provide the positive electrode for a lithium secondary battery according to at least one of [1] to [6], wherein the positive electrode active material is composed of single particles, pseudo-single particles or a combination thereof.

[8] The present invention may provide the positive electrode for a lithium secondary battery according to at least one of [1] to [7], wherein the positive electrode active material layer comprises a positive electrode active material having unimodal particle size distribution exhibiting a single peak in a volume cumulative particle size distribution graph.

[9] The present invention may provide the positive electrode for a lithium secondary battery according to at least one of [1] to [8], wherein an average particle diameter $D_{50}$ of the positive electrode active material is 3 $\mu$m to 6 $\mu$m.

[10] The present invention may provide the positive electrode for a lithium secondary battery according to at least one of [1] to [9], wherein a brittleness force of the positive electrode is 35 gf or less.

[11] The present invention may provide the positive electrode for a lithium secondary battery according to [10], wherein a depth of a fracture point at which the brittleness force is measured is greater than 21 mm from the surface of the positive electrode.

[12] The present invention may provide a lithium secondary battery comprising an electrode assembly comprising the positive electrode according to at least one of [1] to [12], a negative electrode and a separator.

[13] The present invention may provide the lithium secondary battery according to [12], wherein the electrode assembly is a jelly-roll type having a structure in which the positive electrode, the negative electrode, and the separator interposed between the positive electrode and the negative electrode are wound in one direction.

[14] The present invention may provide the lithium secondary battery according to [12] or [13], wherein the lithium secondary battery is cylindrical.

[15] The present invention may provide the lithium secondary battery according to at least one of [12] to [14], wherein, in the electrode assembly, cracks do not occur in the positive electrode within 3 turns.

## ADVANTAGEOUS EFFECTS

During winding a positive electrode, a step that occurs at the end of the positive electrode causes an external force on the electrode in a subsequent positive electrode pattern, causing deformation. If the degree of the deformation becomes severe, the positive electrode may no longer withstand the deformation and plastic deformation occurs, and if the plastic deformation becomes more severe, cracks occur in the positive electrode, causing permanent deformation. If cracks occur in the positive electrode, side reactions with an electrolyte occurs during charging and discharging, which deteriorates the life characteristics and causes a problem of gas generation.

The positive electrode according to the present invention adjusts the loading amount, the porosity of the positive electrode, and the tap density of a positive electrode active material included in a positive electrode active material layer to satisfy a specific relationship, thereby increasing the resistance to plastic deformation so that permanent deformation does not easily occur, or even if plastic deformation occurs, the degree of permanent deformation is adjusted to be small, thereby suppressing permanent deformation at the starting part of the positive electrode and solving the life characteristics and gas generation problems of a lithium secondary battery.

## BEST MODE FOR CARRYING OUT THE INVENTION

Words or terms used in the present description and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In the present invention, a "primary particle" means a particle unit that does not have a grain boundary when observed at a magnification of 5,000 to 20,000 times using a scanning electron microscope. An "average particle diameter of primary particles" means an arithmetic mean value calculated after measuring the particle diameters of primary particles observed in a scanning electron microscope image.

In the present invention, a "secondary particle" is a particle formed by agglomeration of multiple primary particles. In the present invention, a secondary particle in which 10 or fewer primary particles are agglomerated is referred to as a pseudo-single particle in order to distinguish from the conventional secondary particle formed by agglomeration of tens to hundreds of primary particles.

In the present invention, an "average particle diameter $D_{50}$" means a particle size based on 50% of the volume cumulative particle size distribution of a positive electrode active material powder, and may be measured using a laser diffraction method. For example, after dispersing the positive electrode active material powder in a dispersion medium, the resultant may be introduced into a commercially available laser diffraction particle size measuring device (e.g., Microtrac MT 3000), irradiated with ultrasonic waves of about 28 kHz with an output of 60 W, to obtain a volume cumulative particle size distribution graph, and then obtain the particle size corresponding to 50% of the volume cumulative amount.

In the specification, a porosity may be calculated by Mathematical Equation A below.

$$\text{Porosity (\%)} = \{1 - (\text{electrode density/true density})\} \times 100 \qquad \text{[Mathematical Equation A]}$$

In Mathematical Equation A, the true density is a calculated density derived from the density and mass ratio of each component material forming an electrode active material layer under the assumption that no pores are included, and the electrode density is a measured density of the electrode active material layer measured by sampling the electrode active material layer to a certain size.

Hereinafter, the present invention will be explained more particularly.

The positive electrode and/or lithium secondary battery according to the present invention includes at least one of the configurations described below, and may include any combination of the technically possible configurations among the configurations below.

The present invention provides a positive electrode for a lithium secondary battery, comprising: a positive electrode current collector; and a positive electrode active material layer positioned on the positive electrode current collector; and satisfying Equation (1) below.

$$\text{Equation (1): } Y = 10 \times L/(P \times T^2) < 7$$

If the Y value defined as in Equation (1) above for the positive electrode included in the lithium secondary battery is less than 7, the resistance to plastic deformation is high, so that permanent deformation does not easily occur, or even if plastic deformation occurs, the degree of permanent deformation is small. Therefore, it is thought that the positive electrode of the present invention has a small deformation due to external force, so that the effect of suppressing cracks occurs. The Y may be 3 or more and less than 7, or 3.5 or more and less than 7.

In Equation (1) above, L is the loading amount of the positive electrode ($mg/cm^2$), and the loading amount of the positive electrode means the weight per unit area of the positive electrode active material layer coated on the positive electrode current collector.

The L may be 44 to 56 $mg/cm^2$, preferably 44 to 55 $mg/cm^2$, and most preferably 44 to 54 $mg/cm^2$. The positive electrode of the present invention has a high loading amount, so that a lithium secondary battery including the positive electrode may be provided with high capacity. The positive electrode may be a single-sided positive electrode in which a positive electrode active material layer is formed on one side of the positive electrode current collector, or may be a double-sided positive electrode in which positive electrode active material layers are formed on both sides of the positive electrode current collector. The loading amount means the total loading amount of both sides in the case of the double-sided electrode. The positive electrode of the present invention may preferably be a double-sided electrode in which a positive electrode active material layer is present on both sides of the positive electrode current collector.

In Equation (1), P is the porosity (%) of the positive electrode, specifically, the porosity of the positive electrode active material layer included in the positive electrode.

P may be 22.5 to 40.0%, preferably 23.0 to 30.0%, and most preferably 23.0 to 27.0%.

In Equation (1), T is the tap density (g/cc) of the positive electrode active material included in the positive electrode active material layer.

The T may be 1.8 to 2.5 g/cc, preferably 1.9 to 2.5 g/cc, and most preferably 2.0 to 2.5 g/cc.

The positive electrode for a lithium secondary battery of the present invention may include a positive electrode current collector; and a positive electrode active material layer positioned on the positive electrode current collector, and may have a brittleness force of 35 gf or less, and a depth of a fracture point at which the brittleness force is measured may be greater than 21 mm from the surface of the positive electrode.

The brittleness force and the depth of a fracture point at which the brittleness force is measured may be measured using, for example, a texture analysis device.

Specifically, an electrode to be measured may be punched out and fitted into a brittleness electrode fixing device, and the maximum force applied to the brittleness tip may be measured while advancing a round brittleness tip from the surface of the electrode toward the depth direction of the electrode. In addition, the advancing depth of a brittleness tip from the surface with respect to the point at which an electrode crack occurs and the electrode is destroyed may be measured while advancing the round brittleness tip from the surface of the electrode toward the depth direction of the electrode.

Brittleness refers to the property of a material to be destroyed without permanent deformation and to be destroyed with only a very small amount of permanent deformation due to an external force, and the brittleness force is an indicator of the rigidity of an electrode.

At the point where the brittleness force is measured, the force applied to a measuring tip suddenly drops and the electrode is destroyed, and the depth at which the measuring tip digs from the surface of the electrode at this time is defined as the depth of the fracture point where the brittleness force is measured.

The positive electrode of the present invention may be formed by a structure in which a positive electrode active material layer is formed on one side or both sides of a long sheet-shaped positive electrode current collector.

The positive electrode of the present invention may be manufactured by applying a positive electrode slurry prepared by dispersing a positive electrode active material, a conductive material, and a binder in a solvent such as dimethyl sulfoxide (DMSO), isopropyl alcohol, N-methylpyrrolidone (NMP), acetone, water, or the like on one side or both sides of a long sheet-shaped positive electrode current collector, removing the solvent of the positive electrode slurry through a drying process, and then rolling.

As the positive electrode current collector, various positive electrode current collectors used in the relevant technical field may be used. For example, as the positive electrode current collector, stainless steel, aluminum, nickel, titanium, calcined carbon, or aluminum or stainless steel surface-treated with carbon, nickel, titanium, silver, or the like may be used. The positive electrode current collector may typically have a thickness of 3 to 500 $\mu$m, and may also form fine unevenness on the surface of the positive electrode current collector to increase the adhesive strength of the positive electrode active material. The positive electrode current collector may be used in various forms such as a film, a sheet, a foil, a net, a porous body, a foam, and a non-woven fabric. Most preferably, an aluminum thin film may be used in terms of elongation control, or the like.

Meanwhile, as the positive electrode active material, positive electrode active materials generally used in the relevant technical field may be used.

Preferably, the positive electrode active material may include a lithium nickel-based oxide, and specifically, may include a lithium nickel-based transition metal oxide having a nickel content of 90 atm% or more among transition metals excluding lithium. Preferably, the lithium nickel-based oxide may include Ni in an amount of 90 mol% to less than 100 mol%, 93 mol% to less than 100 mol%, or 95 mol% to less than 100 mol%. If using lithium nickel-based oxide having a high Ni content as described above, high capacity may be achieved.

More specifically, the positive electrode active material may include a lithium nickel-based oxide represented by [Formula 2] below.

$$\text{[Formula 2]} \qquad Li_aNi_bCo_cM^1_dM^2_eO_2$$

In Formula 2, $M^1$ may be Mn, Al or a combination thereof, preferably Mn or Mn and Al.

$M^2$ may be one or more selected from the group consisting of Zr, W, Y, Ba, Ca, Ti, Mg, Ta and Nb, preferably one or more selected from the group consisting of Zr, Y, Mg and Ti, more preferably Zr, Y or a combination thereof. The $M^2$ element is not essential, but if included in an appropriate amount, grain growth may be promoted during calcining or a role in improving crystal structure stability may be achieved.

The a represents the molar ratio of lithium in the lithium nickel-based oxide, and may be $0.8 \leq a \leq 1.2$, $0.85 \leq a \leq 1.15$, or $0.9 \leq a \leq 1.2$. If the molar ratio of lithium satisfies the above range, the crystal structure of the lithium nickel-based oxide may be stably formed.

The b represents the molar ratio of nickel among all metals excluding lithium in the lithium nickel-based oxide, and may be $0.9 \leq b < 1$, $0.93 \leq b < 1$, or $0.95 \leq b < 1$. If the molar ratio of nickel satisfies the above range, high energy density may be exhibited, and high capacity may be achieved.

The c represents the molar ratio of cobalt among all metals excluding lithium in the lithium nickel-based oxide, and may be $0 < c < 0.1$, $0 < c < 0.07$, or $0.02 \leq c \leq 0.07$. If the molar ratio of cobalt satisfies the above range, good resistance characteristics and output characteristics may be achieved.

The above d represents the molar ratio of the $M^1$ element among all metals excluding lithium in the lithium nickel-based oxide, and may be $0 < d < 0.1$, $0 < d < 0.07$, or $0.005 \leq d \leq 0.05$.

If the molar ratio of the $M^1$ element satisfies the above range, the structural stability of the positive electrode active material is excellent.

The e represents the molar ratio of the $M^2$ element among all metals excluding lithium in the lithium nickel-based oxide, and may be $0 \leq e \leq 0.05$, or $0 \leq e \leq 0.01$.

Meanwhile, the positive electrode active material according to the present invention may further include, if necessary, a coating layer including one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si and S on the surface of the lithium nickel-based oxide particle.

Preferably, the coating element may be Al, B, Co or a combination thereof, and most preferably, the coating element may be B.

If the coating layer exists on the surface of the lithium nickel-based oxide particle, the contact between an electrolyte and a lithium composite transition metal oxide is suppressed due to the coating layer, and thus, the effect of reducing the elution of the transition metal or the generation of gas due to side reactions with the electrolyte may be obtained.

Meanwhile, the form of the positive electrode active material is not particularly limited, and may be a secondary particle form in which a plurality of primary particles are agglomerated, a single particle form composed of one primary particle, or a combination form thereof.

Preferably, the positive electrode active material may include a positive electrode active material composed of a single particle consisting of one primary particle and/or a pseudo-single particle that is an agglomerate of 10 or fewer primary particles. By using a positive electrode active material composed of a single particle consisting of one primary particle and/or a pseudo-single particle that is an agglomerate of 10 or fewer primary particles as the positive electrode active material, a lithium secondary battery having high capacity and excellent safety may be obtained.

The positive electrode active material in the form of a single particle consisting of one primary particle or a pseudo-single particle in which 10 or fewer primary particles are agglomerated has higher particle strength than the conventional positive electrode active material in the form of a secondary particle in which tens to hundreds of primary particles are agglomerated, so that particle breakage hardly occurs during rolling. In addition, in the case of positive electrode active materials in the form of single particles or pseudo-single particles, since the number of primary particles constituting the particles is small, the change due to volume expansion and contraction of the primary particles during charging and discharging is small, and accordingly, the occurrence of cracks inside the particles is also significantly reduced.

Meanwhile, the positive electrode active material in the form of a single particle and/or a pseudo-single particle according to the present invention may have an average particle diameter $D_{50}$ of 6 $\mu$m or less, 4 $\mu$m or less, 3 $\mu$m or less, or 2 $\mu$m or less, for example, 0.5 $\mu$m to 6 $\mu$m, preferably 1 $\mu$m to 6 $\mu$m, more preferably 3 $\mu$m to 6 $\mu$m. If the average particle diameter $D_{50}$ of the positive electrode active material satisfies the above range, the increase in resistance may be minimized.

The positive electrode active material in the form of a single particle and/or a pseudo-single particle has a problem in that the lithium mobility is lower than that of a positive electrode active material in the form of a secondary particle, because the interface between the primary particles that serve as the diffusion path of lithium ions inside the particles is small, which increases the resistance. The increase in resistance becomes more severe as the particle size increases, and if the resistance increases, capacity and output characteristics are adversely affected. Therefore, in the present invention, by applying a single particle or pseudo-single particle positive electrode active material having an average particle diameter $D_{50}$ of 5 $\mu$m or less, the lithium ion diffusion distance inside the particle is minimized, thereby suppressing the increase in resistance.

Therefore, if the content of Ni in the positive electrode material is increased to accomplish high energy, there is a problem that the structural instability of the positive electrode increases, but if the positive electrode active material is used in the form of a single particle and/or pseudo-single particle, the amount of gas generated due to particle breakage and internal cracks may be significantly reduced, and excellent safety may be achieved. However, if using a positive electrode active material having a small average particle diameter in the form of a single particle and/or pseudo-single particle, plastic deformation due to load and external force occurs easily, so cracks are likely to occur, and therefore, it is necessary to adjust so that Condition 1 or Condition 2 is satisfied.

The single particle and/or pseudo-single particle form positive electrode active material may have an average particle diameter of the primary particles of 5 $\mu$m or less, 4 $\mu$m or less, 3 $\mu$m or less, or 2 $\mu$m or less, for example, 0.5 $\mu$m to 5 $\mu$m, preferably 1 $\mu$m to 5 $\mu$m, more preferably 2 $\mu$m to 5 $\mu$m. If the average particle diameter of the primary particles satisfies the above range, a single particle and/or pseudo-single particle form positive electrode active material having excellent electrochemical characteristics may be formed. If the average particle diameter of the primary particles is too small, the number of agglomerates of the primary particles forming the positive electrode active material increases, which reduces the effect of suppressing particle breakage during rolling, and if the average particle diameter of the primary particles is too large, the lithium diffusion path inside the primary particles becomes long, which increases resistance and reduces output characteristics.

In the present invention, it is preferable that the positive electrode active material in the form of a single particle and/or pseudo-single particle has unimodal particle size distribution. Conventionally, bimodal positive electrode active materials in which a large-particle positive electrode active material with a large average particle size is mixed with a small-particle positive electrode active material with a small average particle size have been widely used in order to improve the electrode density of the positive electrode active material layer. However, in the case of positive electrode active materials in the form of a single particles or pseudo-single particle, if the particle diameter increases, the lithium movement path becomes longer and resistance increases significantly, so if large diameter particles are mixed and used, there may be a problem that capacity and output characteristics are deteriorated. Therefore, in the present invention, by using a positive electrode active material having unimodal distribution, the increase in resistance may be minimized.

The lithium secondary battery according to the present invention may include a positive electrode, a negative electrode, and an electrode assembly including.

The negative electrode of the present invention may be formed into a structure in which a negative electrode active material layer is formed on one side or both sides of a long sheet-shaped negative electrode current collector, and the negative electrode active material layer may include a negative electrode active material containing Si, a conductive material, and a binder.

Specifically, the negative electrode may be manufactured by applying a negative electrode slurry prepared by dispersing a negative electrode active material, a conductive material, and a binder in a solvent such as dimethyl sulfoxide (DMSO), isopropyl alcohol, N-methylpyrrolidone (NMP), acetone, water, or the like on one side or both sides of a long sheet-shaped negative electrode current collector, and removing the solvent of the negative electrode slurry through a drying process, and then rolling.

As the negative electrode current collector, negative electrode current collectors generally used in the relevant technical field may be used, and for example, copper, stainless steel, aluminum, nickel, titanium, fired carbon, copper or stainless steel, surface-treated with carbon, nickel, titanium, silver, or the like, an aluminum-cadmium alloy, or the like may be used. The negative electrode current collector may typically have a thickness of 3 to 500 $\mu$m, and, like the positive electrode current collector, fine unevenness may be formed on the surface of the current collector to strengthen the adhesive strength of the negative electrode active material. For example, various forms such as a film, a sheet, a foil, a net, a porous body, a foam, and a non-woven fabric may be used.

The negative electrode active material may include a silicon-based negative electrode active material such as Si, a Si-Me alloy (where Me is one or more selected from the group consisting of Al, Sn, Mg, Cu, Fe, Pb, Zn, Mn, Cr, Ti, and Ni), SiOy (where 0<y<2), and a Si-C composite, and most preferably, a silicon-based negative electrode active material selected from the group consisting of SiO, SiC, and Si.

As a negative electrode active material other than the silicon-based negative electrode active material, a compound capable of reversible intercalation and deintercalation of lithium may be used. Specific examples include carbonaceous materials such as artificial graphite, natural graphite, graphitized carbon fiber, and amorphous carbon; a lithium metal thin film; metal materials capable of alloying with lithium such as Sn and Al, or the like, and any one or a mixture of two or more thereof may be used.

The silicon-based negative electrode active material may be included in an amount of 3 wt% or more, preferably 3 to 10 wt%, and more preferably 3 to 6 wt% relative to the entire negative electrode active material layer.

The conductive material is used to impart conductivity to the negative electrode, and in the battery to be formed, any conductive material that does not cause a chemical change and has electronic conductivity may be used without specific limitation. Specific examples include graphite such as natural graphite or artificial graphite; carbon-based materials such as carbon black, acetylene black, Ketjen black, channel black, furnace black, lamp black, thermal black, carbon fiber, and carbon nanotube; metal powder or metal fiber of copper, nickel, aluminum, silver or the like; conductive whiskers of zinc oxide, potassium titanate or the like; conductive metal oxides such as titanium oxide; or conductive polymers such as polyphenylene derivatives, and among them, one alone or a mixture of two or more may be used.

The conductive material may be included in an amount of typically 0.01 to 0.1 wt%, preferably 0.05 to 0.1 wt%, and more preferably 0.07 to 0.1 wt%, relative to the total weight of the negative electrode active material layer.

The binder serves to improve the adhesion between the negative electrode active material particles and the adhesive strength between the negative electrode active material and the negative electrode current collector. Specific examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene-butadiene rubber (SBR), fluororubber, or various copolymers thereof, and any one alone or a mixture of two or more thereof may be used.

The binder may be included in an amount of 1 to 5 wt%, preferably 1 to 4 wt%, and more preferably 1 to 3 wt%, based on the total weight of the negative electrode active material layer.

In addition to the positive and negative electrodes, a separator interposed between the positive and negative electrodes separates the negative and positive electrodes and provides a passage for lithium ions to move. Any one commonly used as a separator in a lithium secondary battery, may be used without any specific restrictions. Specifically, the separator may be a porous polymer film, for example, a porous polymer film made of polyolefin polymers such as an ethylene homopolymer, a propylene homopolymer, an ethylene/butene copolymer, an ethylene/hexene copolymer, and an ethylene/methacrylate copolymer, or a stacked structure of two or more layers thereof. In addition, a conventional porous nonwoven fabric, for example, a nonwoven fabric made of high-melting-point glass fibers, polyethylene terephthalate fibers, or the like may also be used. Additionally, coated separators containing ceramic components or polymer materials may be used to secure heat resistance or mechanical strength.

The lithium secondary battery according to the present invention may include a positive electrode, a negative electrode and an electrode assembly including; a battery can in which the electrode assembly is accommodated; an electrolyte injected into the battery can; and a sealant sealing the open end of the battery can.

The outer shape of the lithium secondary battery of the present invention may be a cylindrical or square shape using a can, and preferably, the lithium secondary battery of the present invention may be a cylindrical lithium secondary battery. The cylindrical lithium secondary battery may include a jelly-roll type electrode assembly having a structure in which a positive electrode, a negative electrode, and a separator interposed between the positive electrode and the negative electrode are wound in one direction; a battery can in which the electrode assembly is accommodated; and a sealant sealing the open end of the battery can.

The lithium secondary battery of the present invention may include a positive electrode satisfying Equation (1) of the present invention, so that cracks of the positive electrode may not occur in the wound electrode assembly, and in particular, cracks may not occur within 3 turns. The above turn may mean the number of winding wheels of the electrode assembly, and the lithium secondary battery of the present invention may include an electrode assembly having a turn number of 20 to 30.

The electrolyte used in the present invention may include, but is not limited to, an organic liquid electrolyte, an inorganic liquid electrolyte, a solid polymer electrolyte, a gel-type polymer electrolyte, a solid inorganic electrolyte, a molten inorganic electrolyte, or the like, that may be used for the manufacture of a lithium secondary battery.

Specifically, the electrolyte may include an organic solvent and a lithium salt.

The organic solvent may be used without any particular limitation as long as it may act as a medium through which ions involved in the electrochemical reaction of the battery may move. Specifically, the organic solvent may include ester-based solvents such as methyl acetate, ethyl acetate, $\gamma$-butyrolactone, or $\varepsilon$-caprolactone; ether-based solvents such as dibutyl ether or tetrahydrofuran; ketone-based solvents such as cyclohexanone; aromatic hydrocarbon solvents such as benzene and fluorobenzene; carbonate solvents such as dimethyl carbonate (DMC), diethyl carbonate (DEC), ethyl methyl carbonate (EMC), ethylene carbonate (EC), and propylene carbonate (PC); alcohol solvents such as ethyl alcohol and isopropyl alcohol; nitriles such as R-CN (R is a linear, branched, or cyclic hydrocarbon group having 2 to 20 carbon atoms and may include a double-bonded aromatic ring or an ether bond); amides such as dimethylformamide; dioxolanes such as 1,3-dioxolane; or sulfolanes. Among them, a carbonate solvent is preferable, and a mixture of a cyclic carbonate (e.g., ethylene carbonate, propylene carbonate or the like) having high ionic conductivity and high dielectric constant that may improve the charge and discharge performance of the battery and a low-viscosity linear carbonate compound (e.g., ethyl methyl carbonate, dimethyl carbonate, diethyl carbonate or the like) is more preferable.

The lithium salt may be used without any specific limitations as long as it is a compound capable of providing lithium ions used in a lithium secondary battery. Specifically, the anion of the lithium salt may be one or more selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may use $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. It is recommended that the concentration of the lithium salt be used within the range of 0.1 to 2.0 M. If the concentration of the lithium salt is within the above range, the electrolyte has appropriate conductivity and viscosity and may exhibit excellent electrolyte performance, and lithium ions may move effectively.

In addition to the electrolyte components, for the purpose of improving the life characteristics of the battery, suppressing the decrease in battery capacity, and improving the discharge capacity of the battery, the electrolyte may further include one or more additives, for example, haloalkylene carbonate compounds such as difluoroethylene carbonate, pyridine, triethylphosphite, triethanolamine, cyclic ethers, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride. In this case, the additives may be included in an amount of 0.1 to 10 wt% based on the total weight of the electrolyte.

The lithium secondary battery according to the present invention may be used not only as a battery cell used as a power source for a small device, but may also be preferably used as a unit battery in a medium- or large-sized battery module including a plurality of battery cells.

Examples of the medium- or large-sized devices include, but are not limited to, electric vehicles, hybrid electric vehicles, plug-in hybrid electric vehicles, and power storage systems.

Hereinafter, the present invention will be described in more detail through specific examples. However, the examples are only examples to help the understanding of the present invention and do not limit the scope of the present invention. It is obvious to those skilled in the art that various changes and modifications are possible within the scope and technical idea of this description, and it is natural that such modifications and variations fall within the scope of the appended claims.

**Examples**

**Example 1**

Li[Ni$_{0.90}$Co$_{0.05}$Mn$_{0.03}$Al$_{0.02}$]O$_2$ with a tap density of 1.88 g/cc and an average particle diameter D$_{50}$ of 3.71 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.8 mg/cm$^2$ based on both sides, and the porosity was 24.0%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order and then wound to manufacture a jelly-roll type electrode assembly.

**Example 2**

Li[Ni$_{0.95}$Co$_{0.03}$Mn$_{0.01}$Al$_{0.01}$]O$_2$ with a tap density of 2.10 g/cc and an average particle diameter D$_{50}$ of 3.97 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.8 mg/cm$^2$ based on both sides, and the porosity was 24.0%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order, and then wound to manufacture a jelly-roll type electrode assembly.

**Example 3**

Li[Ni$_{0.95}$Co$_{0.03}$Mn$_{0.01}$Al$_{0.01}$]O$_2$ with a tap density of 2.1 g/cc and an average particle diameter D$_{50}$ of 4.17 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 54.0 mg/cm$^2$ based on both sides, and the porosity was 23.8%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order, and then wound to manufacture a jelly-roll type electrode assembly.

**Example 4**

Li[Ni$_{0.95}$Co$_{0.03}$Mn$_{0.01}$Al$_{0.01}$]O$_2$ with a tap density of 2.1 g/cc and an average particle diameter D$_{50}$ of 4.17 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.8 mg/cm$^2$ based on both sides, and the porosity was 23.8%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order, and then wound to manufacture a jelly-roll type electrode assembly.

### Example 5

Li[Ni$_{0.95}$Co$_{0.03}$Mn$_{0.01}$Al$_{0.01}$]O$_2$ with a tap density of 2.1 g/cc and an average particle diameter D$_{50}$ of 4.17 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 46.8 mg/cm$^2$ based on both sides, and the porosity was 23.8%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order and then wound to manufacture a jelly-roll type electrode assembly.

### Example 6

Li[Ni$_{0.95}$Co$_{0.03}$Mn$_{0.01}$Al$_{0.01}$]O$_2$ with a tap density of 2.4 g/cc and an average particle diameter D$_{50}$ of 3.65 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 49.0 mg/cm$^2$ based on both sides, and the porosity was 24.1%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order, and then wound to manufacture a jelly-roll type electrode assembly.

### Example 7

Li[Ni$_{0.95}$Co$_{0.03}$Mn$_{0.01}$Al$_{0.01}$]O$_2$ with a tap density of 2.3 g/cc and an average particle diameter D$_{50}$ of 3.72 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.0 mg/cm$^2$ based on both sides, and the porosity was 23.8%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order, and then wound to manufacture a jelly-roll type electrode assembly.

### Example 8

Li[Ni$_{0.95}$Co$_{0.03}$Mn$_{0.01}$Al$_{0.01}$]O$_2$ with a tap density of 1.78 g/cc and an average particle diameter D$_{50}$ of 3.82 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.8 mg/cm$^2$ based on both sides, and the porosity was 23.1%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order, and then wound to manufacture a jelly-roll type electrode assembly.

**Example 9**

Li[Ni$_{0.95}$Co$_{0.03}$Mn$_{0.01}$Al$_{0.01}$]O$_2$ with a tap density of 1.78 g/cc and an average particle diameter D$_{50}$ of 3.82 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.8 mg/cm$^2$ based on both sides, and the porosity was 28.8%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order and then wound to manufacture a jelly-roll type electrode assembly.

**Comparative Example 1**

Li[Ni$_{0.95}$Co$_{0.03}$Mn$_{0.01}$Al$_{0.01}$]O$_2$ with a tap density of 1.65 g/cc and an average particle diameter D$_{50}$ of 4.06 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.8 mg/cm$^2$ based on both sides, and the porosity was 23.8%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order and then wound to manufacture a jelly-roll type electrode assembly.

**Comparative Example 2**

Li[Ni$_{0.95}$Co$_{0.03}$Mn$_{0.01}$Al$_{0.01}$]O$_2$ with a tap density of 1.78 g/cc and an average particle diameter D$_{50}$ of 3.91 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.8 mg/cm$^2$ based on both sides, and the porosity was 22.8%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were stacked in that order and then wound to manufacture a jelly-roll type electrode assembly.

**Comparative Example 3**

Li[Ni$_{0.95}$Co$_{0.03}$Mn$_{0.01}$Al$_{0.01}$]O$_2$ with a tap density of 1.77 g/cc and an average particle diameter D$_{50}$ of 3.82 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 50.8 mg/cm$^2$ based on both sides, and the porosity was 21.9%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were laminated in that order and then wound to manufacture a jelly-roll type electrode assembly.

**Comparative Example 4**

Li[Ni$_{0.95}$Co$_{0.03}$Mn$_{0.01}$Al$_{0.01}$]O$_2$ with a tap density of 1.88 g/cc and an average particle diameter D$_{50}$ of 4.17 $\mu$m, carbon nanotubes, and a PVDF binder were mixed in a weight ratio of 95:2:3 in N-methylpyrrolidone to prepare a positive electrode slurry. The positive electrode slurry was applied to both sides of a 15.0 $\mu$m thick aluminum current collector sheet, dried at 120°C, and rolled to form a positive electrode. The loading amount of the formed positive electrode active material layer was 58.0 mg/cm$^2$ based on both sides, and the porosity was 22.7%.

A negative electrode slurry was prepared by mixing a negative electrode active material (graphite:SiO = 95:5 weight ratio mixture), a conductive material (super C), styrene-butadiene rubber (SBR): carboxymethyl cellulose (CMC) in a weight ratio of 98:0.1:1.4:0.9 in water. The negative electrode slurry was applied to both sides of a copper current collector sheet, dried at 150°C, and rolled to form a negative electrode.

A separator was interposed between the positive and negative electrodes formed as described above, and the separator/positive electrode/separator/negative electrode were laminated in that order and then wound to manufacture a jelly-roll type electrode assembly.

**Experimental Example**

The wound electrode assemblies of Examples 1 to 9 and Comparative Examples 1 to 4 were disassembled to check whether cracks occurred during the winding of the positive electrodes. The results are shown in Table 1 below.

[Table 1]

|  | Y | Whether cracks occur |
|---|---|---|
| Example 1 | 6.00 | X |
| Example 2 | 4.80 | X |
| Example 3 | 5.14 | X |
| Example 4 | 4.84 | X |
| Example 5 | 4.46 | X |
| Example 6 | 3.53 | X |
| Example 7 | 3.97 | X |
| Example 8 | 6.94 | X |
| Example 9 | 5.57 | X |
| Comparative Example 1 | 7.84 | ○ |
| Comparative Example 2 | 7.03 | ○ |
| Comparative Example 3 | 7.40 | ○ |
| Comparative Example 4 | 7.23 | ○ |

The electrode assemblies of Examples 1 to 9 including the positive electrodes according to the present invention satisfying the Y value of Equation (1) of less than 7 did not have cracks during winding, but it was confirmed that the electrode assemblies of Comparative Examples 1 to 4 including the positive electrodes having the Y value of 7 or more had cracks during winding.

**Claims**

1. A positive electrode for a lithium secondary battery, the positive electrode comprising: a positive electrode current collector; and a positive electrode active material layer positioned on the positive electrode current collector, the positive electrode satisfying the following Equation (1):

$$\text{Equation (1): } Y = 10 \times L/(P \times T^2) < 7$$

in Equation (1),

L is a loading amount (mg/cm$^2$) of the positive electrode,
P is a porosity (%) of the positive electrode, and
T is a tap density (g/cc) of a positive electrode active material comprised in the positive electrode active material layer.

2. The positive electrode for a lithium secondary battery according to claim 1, wherein the tap density of the positive electrode active material comprised in the positive electrode active material layer is 1.8 g/cc to 2.5 g/cc.

3. The positive electrode for a lithium secondary battery according to claim 1, wherein the loading amount of the positive electrode active material layer is 44 mg/cm$^2$ to 56 mg/cm$^2$.

4. The positive electrode for a lithium secondary battery according to claim 1, wherein the porosity of the positive electrode is 22.5% to 30.0%.

5. The positive electrode for a lithium secondary battery according to claim 1, wherein the positive electrode active material comprised in the positive electrode active material layer is a lithium nickel-based transition metal oxide having a nickel content of 90 atom% or more among transition metals excluding lithium.

6. The positive electrode for a lithium secondary battery according to claim 5, wherein the positive electrode active material is a lithium nickel-based oxide represented by the following [Formula 2]:

[Formula 2]    $Li_aNi_bCo_cM1_dM2_eO_2$

in Formula 2, M$^1$ is Mn, Al or a combination thereof, M$^2$ is one or more selected from the group consisting of Zr, W, Y, Ba, Ca, Ti, Mg, Ta and Nb, $0.8 \leq a \leq 1.2$, $0.9 \leq b < 1$, $0 < c < 0.1$, $0 < d < 0.1$, and $0 \leq e \leq 0.05$.

7. The positive electrode for a lithium secondary battery according to claim 1, wherein the positive electrode active material is composed of single particles, pseudo-single particles or a combination thereof.

8. The positive electrode for a lithium secondary battery according to claim 1, wherein the positive electrode active material layer comprises a positive electrode active material having unimodal particle size distribution exhibiting a single peak in a volume cumulative particle size distribution graph.

9. The positive electrode for a lithium secondary battery according to claim 8, wherein an average particle diameter $D_{50}$ of the positive electrode active material is 3 $\mu$m to 6 $\mu$m.

10. The positive electrode for a lithium secondary battery according to claim 1, wherein a brittleness force of the positive electrode is 35 gf or less.

11. The positive electrode for a lithium secondary battery according to claim 10, wherein a depth of a fracture point at which the brittleness force is measured is greater than 21 mm from the surface of the positive electrode.

12. A lithium secondary battery comprising an electrode assembly comprising the positive electrode of claim 1, a negative electrode and a separator.

13. The lithium secondary battery according to claim 12, wherein the electrode assembly is a jelly-roll type having a structure in which the positive electrode, the negative electrode, and the separator interposed between the positive electrode and the negative electrode are wound in one direction.

14. The lithium secondary battery according to claim 12, wherein the lithium secondary battery is cylindrical.

**15.** The lithium secondary battery according to claim 13, wherein, in the electrode assembly, cracks do not occur in the positive electrode within 3 turns.

## INTERNATIONAL SEARCH REPORT

| International application No. |
|---|
| **PCT/KR2024/013084** |

| A. | CLASSIFICATION OF SUBJECT MATTER |
|---|---|

**H01M 4/131**(2010.01)i; **H01M 4/525**(2010.01)i; **H01M 10/0587**(2010.01)i; **H01M 10/052**(2010.01)i; **H01M 10/04**(2006.01)i; **H01M 50/107**(2021.01)i; **H01M 50/131**(2021.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/131(2010.01); H01G 11/22(2013.01); H01G 11/70(2013.01); H01M 2/34(2006.01); H01M 4/02(2006.01); H01M 4/139(2010.01); H01M 4/525(2010.01); H01M 4/62(2006.01); H01M 50/533(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극 활물질(cathode active material), 로딩량(loading amount), 공극률(porosity), 탭 밀도(tapped density), 단입자(single particle), 유니모달(uni-modal), 크랙(crack), 취성 힘(brittleness force)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2014-086384 A (TOYOTA MOTOR CORP.) 12 May 2014 (2014-05-12)<br>See claim 1; paragraphs [0010], [0019], [0027], [0030], [0034], [0035], [0039], [0045]-[0047], [0054], [0056], [0061] and [0067]; and figures 2-4. | 1-6,10-15 |
| Y | | 7-9 |
| Y | KR 10-2023-0054601 A (LG ENERGY SOLUTION, LTD.) 25 April 2023 (2023-04-25)<br>See claims 1 and 10; and paragraphs [0073]-[0075] and [0090]. | 7-9 |
| A | KR 10-2021-0020850 A (SAMSUNG SDI CO., LTD. et al.) 24 February 2021 (2021-02-24)<br>See abstract; and claims 1-17. | 1-15 |
| A | JP 6726405 B2 (GS YUASA CORP.) 22 July 2020 (2020-07-22)<br>See claims 1 and 2; and paragraphs [0017]-[0021]. | 1-15 |

| ✓ Further documents are listed in the continuation of Box C. | ✓ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 December 2024** | **10 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2024/013084** |

### C. DOCUMENTS CONSIDERED TO BE RELEVANT

| Category* | Citation of document, with indication, where appropriate, of the relevant passages | Relevant to claim No. |
|---|---|---|
| A | JP 2012-114048 A (TOYOTA MOTOR CORP.) 14 June 2012 (2012-06-14)<br>See abstract; and claims 1-18. | 1-15 |

EP 4 675 696 A1

## INTERNATIONAL SEARCH REPORT
### Information on patent family members

International application No.

**PCT/KR2024/013084**

| Patent document cited in search report | | | Publication date (day/month/year) | Patent family member(s) | | | Publication date (day/month/year) |
|---|---|---|---|---|---|---|---|
| JP | 2014-086384 | A | 12 May 2014 | JP | 6016018 | B2 | 26 October 2016 |
| KR | 10-2023-0054601 | A | 25 April 2023 | CN | 118077081 | A | 24 May 2024 |
| | | | | EP | 4418401 | A1 | 21 August 2024 |
| | | | | JP | 2024-537149 | A | 10 October 2024 |
| | | | | KR | 10-2686803 | B1 | 22 July 2024 |
| | | | | US | 2023-0121815 | A1 | 20 April 2023 |
| | | | | WO | 2023-063787 | A1 | 20 April 2023 |
| KR | 10-2021-0020850 | A | 24 February 2021 | KR | 10-2684785 | B1 | 11 July 2024 |
| | | | | US | 2021-0050599 | A1 | 18 February 2021 |
| JP | 6726405 | B2 | 22 July 2020 | JP | 2018-055802 | A | 05 April 2018 |
| JP | 2012-114048 | A | 14 June 2012 | JP | 5598716 | B2 | 01 October 2014 |

Form PCT/ISA/210 (patent family annex) (July 2022)

**EP 4 675 696 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230115742